# EUROPÄISCHE PATENTSCHRIFT

(11) **EP 3 283 776 B1**
(45) Veröffentlichungstag und Bekanntmachung des Hinweises auf die Patenterteilung: **09.10.2019**
(21) Anmeldenummer: 16711141.8
(22) Anmeldetag: 19.03.2016
(51) Int. Cl.: F16B 13/08

(54) **KIPPDÜBEL**
TOGGLE DOWEL
CHEVILLE À BASCULE

(30) Priorität: 15.04.2015 DE 102015105778; 29.09.2015 DE 102015116421
(43) Veröffentlichungstag der Anmeldung: 21.02.2018
(73) Patentinhaber: fischerwerke GmbH & Co. KG, 72178 Waldachtal (DE)
(72) Erfinder: DALY, Aaron, 72285 Pfalzgrafenweiler (DE)
(86) Internationale Anmeldenummer: PCT/EP2016/000487
(87) Internationale Veröffentlichungsnummer: WO 2016/165807

(56) Entgegenhaltungen:
- DE-B- 1 121 792
- US-A- 4 318 651

## Beschreibung

Die Erfindung betrifft einen Kippdübel mit den Merkmalen des Oberbegriffs des Anspruchs 1.

Aus der Patentschrift DE 1 121 792 ist ein Kippdübel zum Befestigen eines Gegenstandes, beispielsweise einer Lampe, an einem dünnwandigen Bauteil bekannt. Bei dem Bauteil handelt es sich beispielsweise um eine Gipskartonplatte. Der Kippdübel weist einen Balken auf, durch den sich eine Gewindebohrung quer erstreckt. Außerdem steht im Bereich der Gewindebohrung seitlich einstückig ein Band ab. Nach dem Bohren eines Bohrlochs im dünnwandigen Bauteil wird der Kippdübel mit einem Ende voraus durch das Bohrloch geschoben, wobei das Band derart zur Seite gebogen wird, dass es seitlich am Balken anliegt. Sobald der Balken vollständig das Bohrloch passiert hat, kann er in dem hinter dem Bauteil liegenden Hohlraum gekippt werden, so dass der Balken mit einer Tragseite an der Rückseite des Bauteils zur Anlage kommt. Die Kippbewegung wird durch ein Ziehen am Band bewirkt. Gleichzeitig wird sichergestellt, dass die Gewindebohrung mit dem Loch fluchtet, so dass eine Schraube in die Gewindebohrung eingedreht werden kann. Mit dieser Schraube kann der Gegenstand an der dem Bediener zugewandten Sichtseite des Bauteils befestigt werden. Nachteilig an dem bekannten Kippdübel ist, dass die Gewindebohrung nur für Schrauben mit einem bestimmten Außendurchmesser und einer bestimmten Gewindeform ausgelegt ist. Weicht eine Schraube von der vorgesehenen Schraubenform ab, so findet sie bei einem zu geringen Durchmesser entweder keinen Halt in der Gewindebohrung oder der Balken dreht bei einem zu großen Durchmesser beim Einschrauben der Schraube mit, so dass die Schraube nicht vollständig in die Gewindebohrung eingeschraubt werden kann.

Aufgabe der Erfindung ist es daher, einen gattungsgemäßen Kippdübel zu schaffen, der mit Schrauben unterschiedlichster Durchmesser und Gewindeformen verwendet werden kann.

Diese Aufgabe wird erfindungsgemäß durch die Merkmale des Anspruchs 1 gelöst. Der erfindungsgemäße Kippdübel zur Befestigung eines Gegenstandes an einem dünnwandigen Bauteil mit einem dahinterliegenden Hohlraum weist einen Balken und ein Band auf, das mit dem Balken verbunden ist. Das Band dient zum Halten des Balkens bei der Montage. Die Verbindung zwischen Balken und Band kann als Drehlager ausgebildet sein, so dass das Band gegenüber dem Balken verschwenkt werden kann. Möglich ist beispielsweise aber auch eine Klipsverbindung. Insbesondere ist die Verbindung einstückig, so dass das Band zusammen mit dem Balken oder mit Teilen des Balkens gefertigt werden kann. Auf der dem Band zugewandten Seite bildet der Balken eine Tragseite zur Anlage am dünnwandigen Bauteil. Der Balken erstreckt sich entlang einer Balkenlängsachse. Mit "Balken" ist insbesondere ein Bauteil bezeichnet, dessen Abmessungen quer zur Balkenlängsachse geringer sind, als in Richtung der Balkenlängsachse. Ein den Balken umschreibender Kreis, dessen Mittelpunkt auf der Balkenlängsachse liegt und dessen Radius normal zur Balkenlängsachse ist, weist somit einen Durchmesser auf, der kleiner oder gleich dem Durchmesser eines Bohrlochs im dünnwandigen Bauteil ist, durch das der Balken eingebracht wird, um einen Gegenstand mit dem Kippdübel am dünnwandigen Bauteil zu befestigen. Die Erstreckung des Balkens in Richtung der Balkenlängsachse ist größer als der Durchmesser des Bohrlochs, so dass der Balken nach dem Kippen im Hohlraum sich nicht mehr aus dem Bohrloch heraus bewegen kann, wenn er mit der Tragseite an der Rückseite des Bauteils anliegt. Der Balken weist eine Öffnung zur Aufnahme einer Schraube auf. Die Öffnung erstreckt sich entlang einer Öffnungslängsachse quer zur Balkenlängsachse, wobei "quer" hier bedeutet, dass die Öffnungslängsachse und die Balkenlängsachse nicht parallel oder identisch sind. Insbesondere sind die beiden Längsachsen im Wesentlichen orthogonal zueinander, wobei sie sich insbesondere schneiden können. In der Öffnung kann ein Innengewinde angeordnet sein, das vorzugsweise als metrisches Regelgewinde in Anlehnung an die DIN 202 (1999-11) oder als Inch-Regelgewinde (UNC) in Anlehnung an den "Unified Thread Standard" ausgeführt ist, so dass die bei Kippdübeln häufig verwendeten Sechskantschrauben mit Regelgewinde in das Innengewinde eingeschraubt werden können.

Erfindungsgemäß ist am Balken mindestens ein Widerlagerelement angeordnet, das einen Abstand zur Öffnungslängsachse aufweist, der geringer als der halbe Innendurchmesser der Öffnung ist. Mit "Innendurchmesser" ist der Durchmesser eines in die Öffnung eingeschriebenen Kreiszylinders gemeint, dessen Achse auf der Öffnungslängsachse liegt. Der "Abstand" bezieht sich hier auf die kürzeste Entfernung eines freien Endes des Widerlagerelements zur Öffnungslängsachse. Anders ausgedrückt bedeutet dies, dass das freie Ende des Widerlagerelements bei einer Projektion des Widerlagerelements in einer Radialebene der Öffnungslängsachse in eine Projektion des freien Querschnitts der Öffnung hinein ragt. Ist das Widerlagerelement in der Öffnung angeordnet, so ragt das freie Ende des Widerlagerelements in die Öffnung hinein und reduziert so den freien Querschnitt der Öffnung lokal. Die in die Öffnung eingeführte Schraube hintergreift mit ihrem Gewinde das Widerlagerelement, so dass die Schraube in der Öffnung gehalten ist. In der Öffnung kann ein Innengewinde ausgebildet sein, dessen Gewinde zu einem Außengewinde einer für den Kippdübel bevorzugten Schraube korrespondiert. In diesem Fall entspricht der Kerndurchmesser des Innengewindes dem Innendurchmesser der Öffnung. Ist der Außendurchmesser einer Schraube kleiner als der der bevorzugten Schraube, wird sie im Innengewinde nicht ausreichend Halt finden, aber am Widerlagerelement. Mit Hilfe des Widerlagerelements können Schrauben in der Öffnung des Kippdübels gehalten werden, die einen Durchmesser aufweisen, der kleiner ist als der Innendurchmesser der Öffnung bzw. kleiner als der Kerndurchmesser des Innengewindes. Zudem können Schrauben verwendet werden, deren Steigung nicht mit der Steigung des Innengewindes übereinstimmt, oder deren Gewindeform von der des Innengewindes abweicht.

Damit das Widerlagerelement das Gewinde einer Schraube hintergreifen kann, weist das Widerlagerelement, zumindest im Bereich seines freien Endes, eine Höhe in Richtung der Öffnungslängsachse auf, die geringer als die Länge der Öffnung ist. Insbesondere beträgt die Höhe des Widerlagerelements maximal 20% der Länge der Öffnung. Insbesondere ist die Höhe des Widerlagerelements kleiner als der axiale Abstand zweier benachbarter Gewindeflanken einer bevorzugten Schraube, die mit dem Kippdübel eine Befestigungseinheit bildet. Insbesondere ist die Höhe geringer als 2,5 Millimeter, insbesondere kleiner als 2,0 Millimeter. Ist in der Öffnung ein Innengewinde ausgebildet, so kann das Innengewinde als metrisches oder Inch-Regelgewinde ausgeführt und das Widerlagerelement zum Hintergreifen der Gewindeflanken von Holz- und/oder Spanplattenschrauben ausgelegt sein, die im Regelfall eine größere Steigung, eine größere Gewindetiefe und einen kleineren Flankenwinkel aufweisen, als eine Schraube mit Regelgewinde.

Vorzugsweise ist der Abstand des Widerlagerelements zur Öffnungslängsachse mindestens 1,0 Millimeter, insbesondere mindestens 1,5 Millimeter, insbesondere mindestens 2,0 Millimeter kleiner als der halbe Innendurchmesser der Öffnung.

Insbesondere ist der Abstand geringer als der halbe Innendurchmesser der Öffnung. Das freie Ende des Widerlagerelements kann auch über die Öffnungslängsachse hinaus ragen und diese schneiden. Somit können Schrauben unterschiedlichster Durchmesser in die Öffnung eingebracht und mittels des Widerlagerelements in der Öffnung gehalten werden.

Damit eine Schraube auch dann durch die Öffnung durchgeschraubt werden kann, wenn sie einen Kerndurchmesser aufweist, der größer ist, als der Abstand des Widerlagerelements und der halbe Innendurchmesser der Öffnung zusammen, ist das Widerlagerelement derart ausgebildet, dass es beim Einführen einer Schraube in die Öffnung von der Öffnungslängsachse weg bewegt werden kann. In diesem Fall weicht das Widerlagerelement der Schraube radial und in die Richtung aus, in die die Schraube in die Öffnung eingebracht wird. Das Widerlagerelement macht somit der Schraube Raum, so dass ein Durchtritt der Schraube durch die Öffnung möglich ist. Hierzu ist das Widerlagerelement vorzugsweise als Kragarm ausgebildet, dessen freies Ende von der Tragseite des Balkens weg gerichtet ist. Insbesondere ist das freie Ende flächig ausgebildet, wobei die Fläche eine Fase aufweisen kann, um einen Eingriff in das Gewinde einer Schraube zu vereinfachen. Das freie Ende weist somit eine Endkante auf, die quer zur Balkenlängsachse, aber im Wesentlichen in einer Radialebene der Öffnungslängsachse verläuft. "Quer" meint hier insbesondere, dass eine normal zur Endkante verlaufende Gerade mit der Balkenlängsachse einen Winkel von 0° bis 15° einschließt, insbesondere einen Winkel von 5° bis 10°. "Im Wesentlichen in einer Radialebene der Öffnungslängsachse" meint hier eine Neigung gegenüber der Öffnungslängsachse von weniger als 15°, insbesondere von weniger als 10°.

Das Widerlagerelement weist vorzugsweise einen Lagerbereich auf, mit dem das Widerlagerelement am und/oder im Balken, insbesondere biegesteif, gelagert ist. Zudem weist das Widerlagerelement einen Eingriffsbereich auf, der gegenüber dem Lagerbereich abgewinkelt ist. Somit kann der Lagerbereich gut an die Form des Balkens angepasst werden, während der abgewinkelte Eingriffsbereich der Interaktion mit der Schraube dient. Insbesondere ist auf der Seite des Eingriffsbereichs, die der Tragseite des Balkens zugewandt ist, ein Gewindeelement ausgebildet, zum Eingriff in das Gewinde der Schraube.

Das Widerlagerelement ist vorzugsweise plattenförmig ausgebildet und in einer Aufnahme des Balkens gelagert. Mit "plattenförmig" ist gemeint, dass die Stärke des Widerlagerelements deutlich geringer ist, als die Breite und die Länge des Widerlagerelements. Insbesondere ist die Stärke um den Faktor 5 bis 10 geringer. Insbesondere weist das Widerlagerelement eine Dicke auf, die kleiner als 2,0 Millimeter, insbesondere kleiner als 1,5 Millimeter ist und insbesondere kleiner als 1,2 Millimeter. Die Aufnahme ist insbesondere derart gestaltet, dass das Widerlagerelement biegesteif mit dem Balken verbunden ist.

Weiterhin ist bevorzugt, dass der Lagerbereich zwei Lagerschenkel aufweist, die durch einen Schlitz voneinander getrennt sind, wobei der Schlitz vorzugsweise U-förmig ausgebildet ist. Insbesondere weist der Schlitz eine Breite auf, die mindestens der Breite eines Lagerschenkels entspricht. Der Schlitz kann dabei in Richtung der Balkenlängsachse oder quer dazu, insbesondere orthogonal zur Balkenlängsachse orientiert sein. Durch die U-förmige Ausgestaltung ist die Anlagefläche der Lagerschenkel gerundet und im Bereich des Schlitzes vergrößert, so dass Druckkräfte, die in der Plattenebene eines plattenförmig ausgebildeten Widerlagerelements wirken, über eine große Fläche in den Balken eingeleitet werden können.

In einer bevorzugten Ausgestaltungsform weist der Balken eine Aufnahme mit zwei Aufnahmeöffnungen zur Aufnahme der Lagerschenkel auf, wobei die Aufnahmeöffnungen durch einen Verstärkungssteg voneinander getrennt sind. Der Verstärkungssteg versteift die Wand der Aufnahme, so dass sich die Wand auch dann nicht oder nur geringfügig biegt, wenn das Widerlagerelement durch die Schraube mit einem Biegemoment belastet wird.

Vorzugsweise ist das Widerlagerelement aus Metall, das aufgrund seiner Elastizität und Festigkeit relativ dünn ausgebildet werden kann, so dass es beim Durchführen einer Schraube durch die Öffnung ohne großen Kraftaufwand gebogen werden kann, aber die Schraube trotzdem mit ausreichendem Widerstand hält. Zudem ist der Balken aus Kunststoff, so dass er kostengünstig im Spritzgussverfahren herstellbar ist.

Die Erfindung wird nachfolgend anhand von zwei in der Zeichnung dargestellten Ausführungsbeispielen näher erläutert.

Es zeigen:
- Figur 1: einen ersten erfindungsgemäßen Kippdübel mit eingeschraubter Spanplattenschraube in einer Seitenansicht;
- Figur 2: den ersten erfindungsgemäßen Kippdübel gemäß Figur 1 in einem Axialschnitt;
- Figur 3: den ersten erfindungsgemäßen Kippdübel ohne Schraube in einem Axialschnitt;
- Figur 4: den ersten erfindungsgemäßen Kippdübel ohne Schraube in einer Draufsicht;
- Figur 5: den ersten erfindungsgemäßen Kippdübel mit einer Schraube mit metrischem Regelgewinde in einer Seitenansicht;
- Figur 6: den ersten erfindungsgemäßen Kippdübel mit einer Schraube mit metrischem Regelgewinde in einem Axialschnitt;
- Figur 7: einen Schnitt entlang der Linie VII-VII der Figur 1;
- Figur 8: ein Widerlagerelement in einer perspektivischen Ansicht;
- Figur 9: einen zweiten erfindungsgemäßen Kippdübel in einer perspektivischen Ansicht;
- Figur 10: einen dritten erfindungsgemäßen Kippdübel in einer Draufsicht; und
- Figur 11: ein Widerlagerelement des Kippdübels der Figur 10 in einer perspektivischen Ansicht.

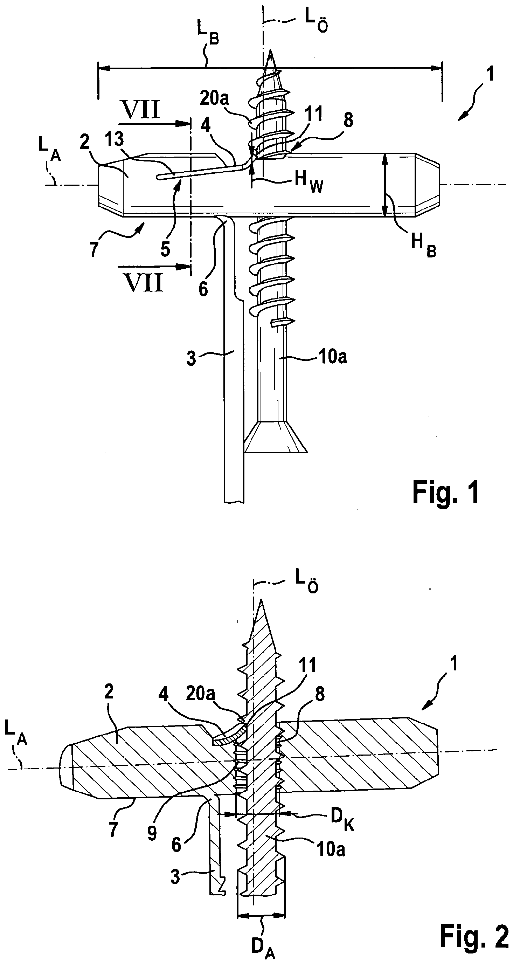

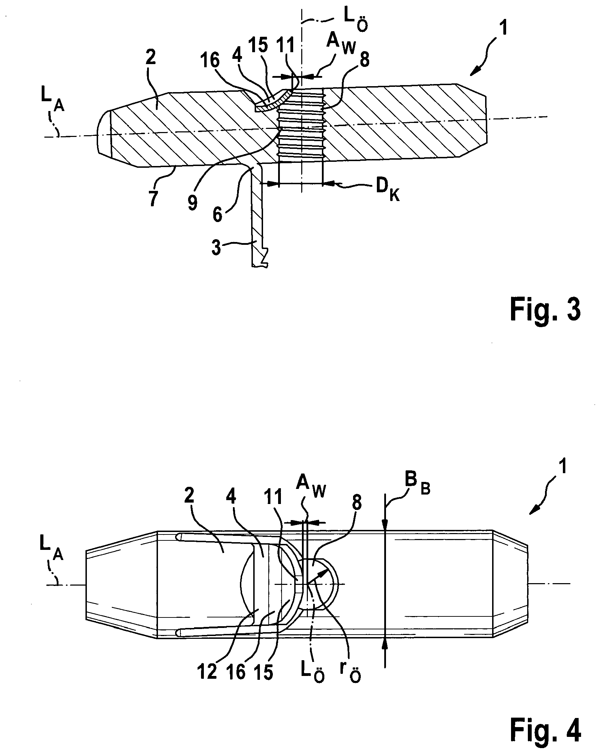

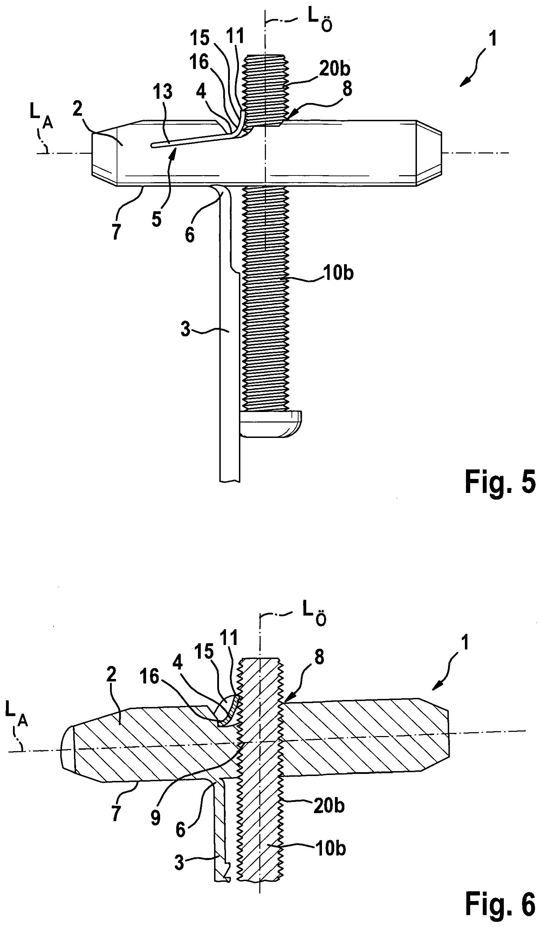

In den Figuren 1 bis 7 ist ein erster erfindungsgemäßer Kippdübel 1 dargestellt, mit dem ein Gegenstand an einem dünnwandigen Bauteil, beispielsweise einer Gipskartonplatte, mit einem dahinterliegendem Hohlraum befestigt werden kann. Gegenstand und Bauteil sind in der Zeichnung nicht dargestellt. Der Kippdübel 1 besteht aus einem Balken 2, einem Band 3 und einem Widerlagerelement 4, das in einer Aufnahme 5 des Balkens 2 eingespannt gelagert ist. Das Band 3 ist lang gestreckt und mit dem Balken 2 einstückig aus Kunststoff hergestellt. Im Bereich der Verbindung 6 zwischen Band 3 und Balken 2 ist das Band 3 gerundet und im Querschnitt reduziert, so dass es gegenüber dem Balken 2 durch elastisches Biegen drehbar ist. Das Band 3 dient zum Halten und zum Positionieren des Balkens 2 bei der Montage des Kippdübels 1 an dem Bauteil. Der Balken 2 erstreckt sich entlang einer Balkenlängsachse L_{A} in seiner Länge L_{B}, während sich die Höhe H_{B} (Figur 1) und die Breite B_{B} (Figur 4) des Balkens 2 radial zur Balkenlängsachse L_{A} erstrecken und kleiner sind als die Länge L_{B}. Die Länge L_{B} des Balkens 2 ist im Wesentlichen vier Mal so groß wie die Höhe H_{B} oder die Breite B_{B}, die im Wesentlichen gleich groß sind. Dem Band 3 zugewandt weist der Balken 2 eine ebene Tragseite 7 zur Anlage der dem Hohlraum zugewandten Seite des Bauteils auf. Bezogen aus seine Länge L_{B} und seine Breite B_{B} ist am Balken 2 mittig eine Öffnung 8 in der Form einer den Balken 2 in seiner gesamten Höhe H_{B} durchdringenden Gewindebohrung angeordnet, die ein Innengewinde 9 aufweist, das als metrisches Regelgewinde ausgeführt ist. Die Öffnung 8 dient zur Aufnahme einer Schraube 10a, 10b und erstreckt sich entlang einer Öffnungslängsachse L_{Ö}, die unter einem Winkel von 90° quer zur Balkenlängsachse L_{B} und normal zu einer Ebene verläuft, die zur ebenen Tragseite 7 parallel ist. In das Innengewinde 9 kann eine Schraube 10b mit metrischem Regelgewinde einschraubt werden, deren Durchmesser mit dem des Innengewindes 9 korrespondiert. In den Figuren 5 und 6 ist dies dargestellt.

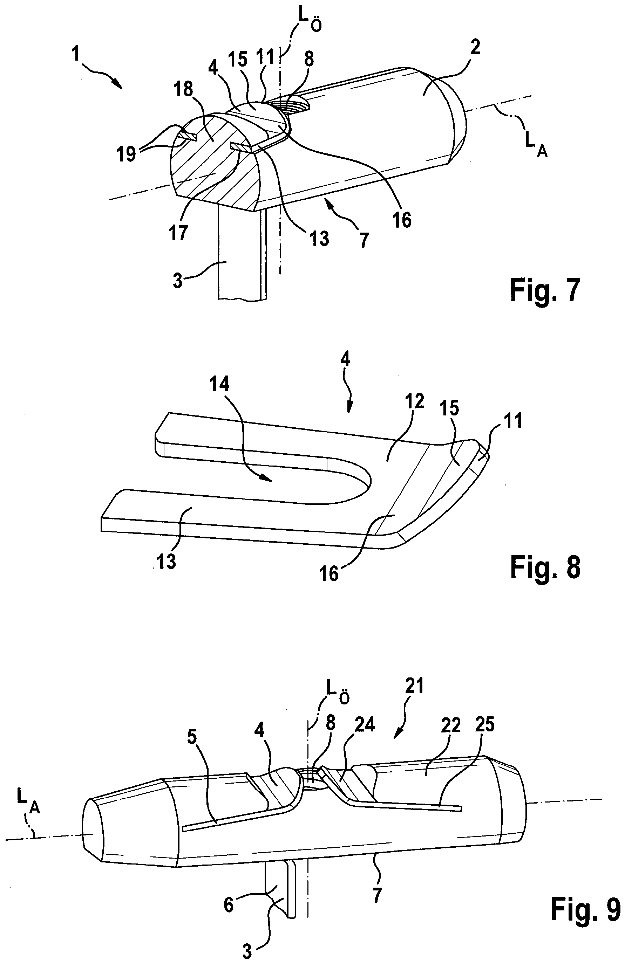

Damit in der Öffnung 8 auch eine Schraube 10a gehalten werden kann, die einen Außendurchmesser D_{A} aufweist, der kleiner oder nur unwesentlich größer als der Kerndurchmesser D_{K} des Innengewindes 9 ist, weist das freie Ende 11 des Widerlagerelements 4 einen Abstand A_{W} zur Öffnungslängsachse L_{Ö} auf, der geringer als der halbe Innendurchmesser D_{K} der Öffnung 8 ist, wobei der Innendurchmesser D_{K} gleich dem Kerndurchmesser des Innengewindes 9 ist. Der halbe Kerndurchmesser ist somit gleich dem Radius r_{Ö} des freien Querschnitts der Öffnung 8 (vgl. Figuren 3 und 4). Der Abstand A_{W} beträgt bei dem dargestellten Kippdübel 0,25 Millimeter bei einem Innendurchmesser D_{K} von 4,5 Millimetern und ist damit um 2 Millimeter geringer als der halbe Innendurchmesser D_{K} der Öffnung 8. Das aus einem dünnen, 0,8 Millimeter starken Stahlblech hergestellte Widerlagerelement 4 ist in Figur 8 dargestellt. Das Widerlagerelement 4 ist plattenförmig ausgebildet und weist einen Lagerbereich 12 mit zwei Lagerschenkeln 13 auf, die durch einen U-förmigen Schlitz 14 voneinander getrennt sind. An den Lagerbereich 12 grenzt ein Eingriffsbereich 15 an, der durch eine Biegung an einer Biegestelle 16 gegenüber dem Lagerbereich 12 um 45° abgewinkelt ist, wodurch das Widerlagerelement 4 im Bereich der Öffnung 8 eine in Richtung der Öffnungslängsachse L_{Ö} gemessene Höhe H_{W} von ungefähr 1,2 Millimeter aufweist. Der Eingriffsbereich 15 verjüngt sich auf der der Biegestelle 16 abgewandten Seite und endet im freien Ende 11. Ist das Widerlagerelement 4 in die Aufnahme 5 eingesetzt, so bildet es einen Kragarm, dessen freies Ende 11 aufgrund der Abwinklung von der Tragseite 7 des Balkens 2 weg gerichtet ist, was das Einführen und Halten einer Schraube 10a, 10b in die bzw. in der Öffnung 8 erleichtert. Die Aufnahme 5 weist zwei nutförmige Aufnahmeöffnungen 17 auf (vgl. Figur 7), in denen die Lagerschenkel 13 flächig und im Wesentlichen ohne Spiel gelagert sind, so dass das Widerlagerelement 4 in der Aufnahme 5 fest eingespannt gehalten ist. Die beiden Aufnahmeöffnungen 17 sind durch einen Verstärkungssteg 18 voneinander getrennt, der den Schlitz 14 ausfüllt und die Wände 19 verbindet, an denen die Lagerschenkel 13 flächig anliegen. Der Verstärkungssteg 18 verhindert, dass sich die Wände 19 voneinander weg bewegen und die Aufnahme 5 aufgeweitet wird, wenn auf das Widerlagerelement 4 ein Biegemoment wirkt.

Wird eine Schraube 10a mit einem Außendurchmesser D_{A} in die Öffnung 8 eingebracht, der kleiner als der Innendurchmesser D_{K} ist, wie dies in den Figuren 1 und 2 anhand einer Schraube 10a, einer Spanplattenschraube mit einem Außengewinde 20a mit einem Außendurchmesser D_{A} von 4 mm dargestellt ist, so kann das Außengewinde 20a aufgrund des zu geringen Außendurchmessers D_{A} nicht in das Innengewinde 9 eingreifen, dessen Gewindeform zudem von dem des Außengewindes 20a abweicht. Die Schraube 10a kann daher in die Öffnung 8 eingeschoben werden, bis sie auf das Widerlagerelement 4 trifft, von dem sie gegen die dem freien Ende 11 des Widerlagerelements 4 gegenüber liegende Wand der Öffnung 8 gedrückt wird. Die Schraube 10a liegt nun exzentrisch in der Öffnung 8 und kann durch Drehen weiter in die Öffnung 8 eingeschraubt werden. Dabei hintergreift das freie Ende 11 des Widerlagerelements 4 das Außengewinde 20a, so dass die Schraube 10a in der Öffnung 8 gehalten ist. Das Außengewinde 20a kann zudem in die dem Widerlagerelement 4 gegenüber liegende Wand der Öffnung 8 einschneiden, wodurch der Halt der Schraube 10a in der Öffnung 8 verbessert wird. Beim Befestigen eines Gegenstands an einem Bauteil mit dem Kippdübel 1 und der Schraube 10a wirkt in der Schraube 10a eine Zugkraft, die auf das freie Ende 11 des Widerlagerelements 4 wirkt und das Widerlagerelement 4 in Richtung der Tragseite 7 zieht. Dabei wird auf das Widerlagerelement 4 eine Druckkraft und ein Biegemoment übertragen, das mittels der Aufnahme 5 in den Balken 2 eingeleitet und als Druckkraft über die Tragseite 7 auf das Bauteil übertragen wird. Somit wird der Gegenstand mit dem Kippdübel 1 und der Schraube 10a gegen das Bauteil verspannt.

Der Gegenstand kann aber auch mittels des Kippdübels 1 mit einer Schraube 10b mit einem zum Innengewinde 9 passenden metrischen Regelgewinde an einem Bauteil befestigt werden, wie dies in den Figuren 5 und 6 dargestellt ist. Hierzu wird die Schraube 10b in das Innengewinde 9 eingeschraubt. Dabei wird das Widerlagerelement 4 von der Tragseite 7 und der Öffnungslängsachse L_{Ö} weg bewegt, wenn die Schraube 10b gegen den Eingriffsbereich 15 des Widerlagerelements 4 stößt. Durch den Schlitz 14 ist der Lagerbereich 12 geschwächt, so dass der aus der Aufnahme 5 ragende Teil des Widerlagerelements 4 entsprechend bewegbar ist. Dabei wird der Abstand A_{W} zwischen dem freien Ende 11 des Widerlagerelements 4 und der Öffnungslängsachse L_{Ö} vergrößert, wodurch ein freier Durchgang entsteht, durch den die Schraube 10b durchgeschraubt werden kann. Dabei kann das freie Ende 11 mit dem metrischen Außengewinde 20b der Schraube 10b in Eingriff kommen, was aber nicht zwingend notwendig ist. Die Schraube 10b ist allein schon in dem zum Außengewinde 20b korrespondierenden Innengewinde 9 sicher gehalten.

Der in Figur 9 dargestellte zweite erfindungsgemäße Kippdübel 21 unterscheidet sich von dem in den Figuren 1 bis 7 dargestellten ersten erfindungsgemäßen Kippdübel 1 nur dadurch, dass im Bereich der Öffnung 8 ein weiteres, zweites Widerlagerelement 24 angeordnet ist, das identisch mit dem ersten Widerlagerelement 4 ausgestaltet, aber bezogen auf das erste Widerlagerelement 4 um 180° zur Öffnungslängsachse L_{Ö} gedreht am Balken 22 in einer zweiten Aufnahme 25 gelagert ist. Durch die Verwendung von zwei Widerlagerelementen 4, 24 können höhere Lasten von einer Schraube in den Balken 22 übertragen und/oder Schrauben mit geringerem Durchmesser in der Öffnung 8 gehalten werden.

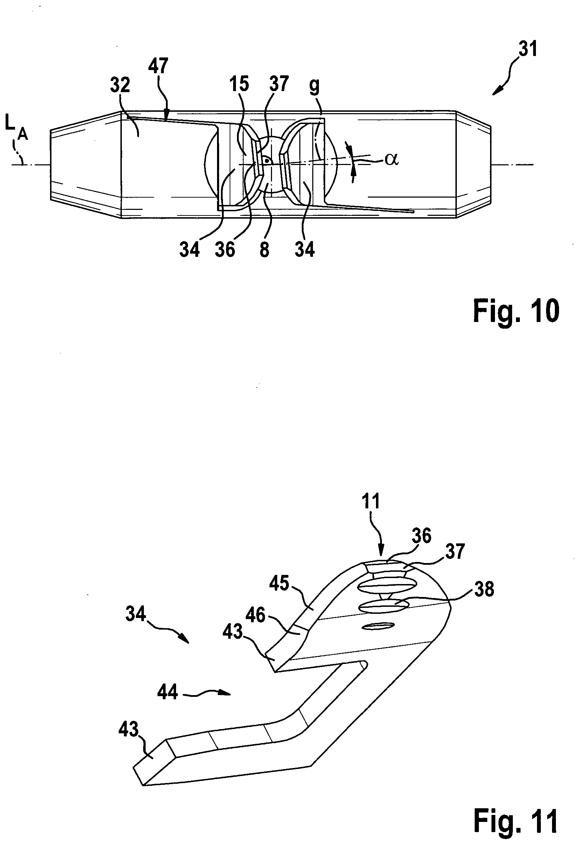

In Figur 10 ist ein weiterer erfindungsgemäßer Kippdübel 31 dargestellt, der ebenfalls zwei Widerlagerelemente 34 im Bereich der Öffnung 8 aufweist. Ein Widerlagerelement 34 ist in Figur 11 dargestellt. Der Kippdübel 31 weist im Bereich der Öffnung 8 kein Innengewinde auf. Damit der Kippdübel 31 ebenfalls mit unterschiedlichen Schrauben 10a, 10b verwendet werden kann, weist das flächig ausgebildete freie Ende 11 eine Fase 36 auf, und somit das freie Ende 11 eine Endkante 37 geringer Höhe, die zum Eingriff in ein metrisches Außengewinde 20b einer Schraube 10b geeignet ist. Die Endkante 37 verläuft quer zur Balkenlängsachse L_{A}, aber im Wesentlichen parallel zur Tragseite 7. "Quer" meint hier, dass eine normal zur Endkante 37 verlaufende Gerade g mit der Längsachse L_{A} des Balkens 32 einen Winkel α von 7° aufweist. Dies vereinfacht das Einschrauben einer metrischen Schraube 10b in den Bereich zwischen den beiden Widerlagerelementen 34. Zudem weisen die Widerlagerelemente 34 an ihren der Öffnung 8 zugewandten Seiten des Eingriffsbereichs 45 jeweils ein Gewindeelement 38 auf, das einen Teil eines Gewindegangs eines Innengewindes bildet, in das die metrische Schraube 10b eingreifen kann. Die metrische Schraube 10b findet hierdurch im Kippdübel 31 einen guten Halt.

Das in Figur 11 dargestellte Widerlagerelement 34 weist einen seitlich offenen, U-förmigen Schlitz 44 auf, der zwei Lagerschenkel 43 in Längsrichtung voneinander trennt. Die Lagerschenkel 43 bilden den Lagerbereich 42, der an der Biegestelle 46 an den Eingriffsbereich 45 grenzt. Das Widerlagerelement 34 kann in eine seitlich offene Aufnahmeöffnung 47 quer zur Längsachse L_{A} eingebracht werden.

### Bezugszeichenliste

### Kippdübel

- 1, 21, 31: Kippdübel
- 2, 22, 32: Balken
- 3: Band
- 4, 24, 34: Widerlagerelement
- 5, 25, 35: Aufnahme
- 6: Verbindung
- 7: Tragseite
- 8: Öffnung
- 9: Innengewinde
- 10a, 10b: Schraube
- 11: freies Ende des Widerlagerelements 4, 24, 34
- 12, 42: Lagerbereich
- 13, 43: Lagerschenkel
- 14, 44: Schlitz
- 15, 45: Eingriffsbereich
- 16, 46: Biegestelle
- 17, 47: Aufnahmeöffnung
- 18: Verstärkungssteg
- 19: Wand
- 20a, 20b: Außengewinde der Schraube 10a, 10b
- 36: Fase
- 37: Endkante
- 38: Gewindeelement
- A_{W}: Abstand des freien Endes 11 von der Öffnungslängsachse L_{Ö}
- B_{B}: Breite des Balkens 2, 22, 32
- D_{A}: Außendurchmesser der Schraube 10a
- D_{K}: Innendurchmesser der Öffnung 8
- g: Gerade
- H_{B}: Höhe des Balkens 2, 22, 32
- H_{W}: Höhe des Widerlagerelements 4, 24, 34
- L_{A}: Längsachse des Balkens 2, 22, 32
- L_{B}: Länge des Balkens 2, 22, 32
- L_{Ö}: Längsachse der Öffnung 8
- r_{Ö}: Radius des freien Querschnitts der Öffnung 8

## Patentansprüche

1. Kippdübel (1, 21, 31) zur Befestigung eines Gegenstandes an einem dünnwandigen Bauteil,
der einen Balken (2, 22, 32) und ein Band (3) aufweist, das mit dem Balken (2, 22, 32) verbunden ist und zum Halten des Balkens (2, 22, 32) bei der Montage dient, wobei sich der Balken (2, 22, 32) entlang einer Balkenlängsachse (L_{A}) erstreckt und auf der dem Band (3) zugewandten Seite eine Tragseite (7) zur Anlage am Bauteil aufweist, und
wobei der Balken (2, 22, 32) eine Öffnung (8) zur Aufnahme einer Schraube (10a, 10b) aufweist, wobei sich die Öffnung (8) entlang einer Öffnungslängsachse (L_{Ö}) quer zur Balkenlängsachse (L_{A}) erstreckt,
**dadurch gekennzeichnet,**
**dass** am Balken (2, 22) mindestens ein Widerlagerelement (4, 24) angeordnet ist, das einen Abstand (A_{W}) zur Öffnungslängsachse (L_{Ö}) aufweist, der geringer als der halbe Innendurchmesser (D_{K}) der Öffnung (8) ist.

2. Kippdübel nach Anspruch 1, **dadurch gekennzeichnet, dass** der Abstand (A_{W}) des Widerlagerelements (4, 24, 34) zur Öffnungslängsachse (L_{Ö}) mindestens 1,0 Millimeter, vorzugsweise mindestens 1,5 Millimeter, insbesondere mindestens 2,0 Millimeter geringer ist, als der halbe Innendurchmesser (D_{K}) der Öffnung (8).

3. Kippdübel nach Anspruch 1 oder 2, **dadurch gekennzeichnet, dass** das Widerlagerelement (4, 24, 34) derart ausgebildet ist, dass es beim Einführen einer Schraube (10a, 10b) in die Öffnung (8) von der Öffnungslängsachse (L_{Ö}) weg bewegt werden kann.

4. Kippdübel nach einem der Ansprüche 1 bis 3, **dadurch gekennzeichnet, dass** das Widerlagerelement (4, 24, 34) als Kragarm ausgebildet ist, dessen freies Ende (11) von der Tragseite (7) des Balkens (2, 22, 32) weg gerichtet ist.

5. Kippdübel nach einem der Ansprüche 1 bis 4, **dadurch gekennzeichnet, dass** das Widerlagerelement (4, 24, 34) einen Lagerbereich (12, 42) und einen Eingriffsbereich (15, 45) aufweist, wobei der Eingriffsbereich (15, 45) gegenüber dem Lagerbereich (12, 42) abgewinkelt ist.

6. Kippdübel nach einem der Ansprüche 1 bis 5, **dadurch gekennzeichnet, dass** das Widerlagerelement (4, 24, 34) plattenförmig ausgebildet und in einer Aufnahme (5, 25, 35) des Balkens (2, 22, 32) gelagert ist.

7. Kippdübel nach Anspruch 5 oder den Ansprüchen 5 und 6, **dadurch gekennzeichnet, dass** der Lagerbereich (12, 42) zwei Lagerschenkel (13, 43) aufweist, die durch einen Schlitz (14, 44) voneinander getrennt sind, wobei der Schlitz (14, 44) vorzugsweise U-förmig ausgebildet ist.

8. Kippdübel nach Anspruch 7, **dadurch gekennzeichnet, dass** die Aufnahme (5, 25, 35) zwei Aufnahmeöffnungen (17, 47) zur Aufnahme der Lagerschenkel (13, 43) aufweist, wobei die Aufnahmeöffnungen (17, 47) durch einen Verstärkungssteg (18) voneinander getrennt sind.

9. Kippdübel nach einem der Ansprüche 1 bis 8, **dadurch gekennzeichnet, dass** das Widerlagerelement (4, 24, 34) aus Metall und der Balken (2, 22, 32) aus Kunststoff ist.

10. Kippdübel nach einem der Ansprüche 1 bis 9, **dadurch gekennzeichnet, dass** die Öffnung (8) ein Innengewinde (9) aufweist, das als metrisches Regelgewinde oder als UNC-Gewinde ausgeführt ist.

## Claims

1. Toggle fixing (1, 21, 31) for fixing an article to a thin-walled building component, which has a crosspiece (2, 22, 32) and a strip (3) which is connected to the crosspiece (2, 22, 32) and serves for holding the crosspiece (2, 22, 32) during mounting, wherein the crosspiece (2, 22, 32) extends along a crosspiece longitudinal axis (L_{A}) and has on the side facing towards the strip (3) a supporting side (7) for contact with the building component, and
wherein the crosspiece (2, 22, 32) has an opening (8) for receiving a screw (10a, 10b), the opening (8) extending along an opening longitudinal axis (L_{Ö}) transverse with respect to the crosspiece longitudinal axis (L_{A}), **characterised in that**
there is arranged on the crosspiece (2, 22) at least one counterbearing element (4, 24) having a spacing (A_{W}) from the opening longitudinal axis (L_{Ö}) that is less than half the internal diameter (D_{K}) of the opening (8).

2. Toggle fixing according to claim 1, **characterised in that** the spacing (A_{W}) of the counterbearing element (4, 24, 34) from the opening longitudinal axis (L_{Ö}) is at least 1.0 millimetre, preferably at least 1.5 millimetres, especially at least 2.0 millimetres, less than half the internal diameter (D_{K}) of the opening (8).

3. Toggle fixing according to claim 1 or 2, **characterised in that** the counterbearing element (4, 24, 34) is formed in such a way that, on insertion of a screw (10a, 10b) into the opening (8), it can be moved away from the opening longitudinal axis (L_{Ö}).

4. Toggle fixing according to any one of claims 1 to 3, **characterised in that** the counterbearing element (4, 24, 34) is in the form of a cantilever arm, the free end (11) of which is directed away from the supporting side (7) of the crosspiece (2, 22, 32).

5. Toggle fixing according to any one of claims 1 to 4, **characterised in that** the counterbearing element (4, 24, 34) has a bearing region (12, 42) and an engagement region (15, 45), the engagement region (15, 45) being bent at an angle relative to the bearing region (12, 42).

6. Toggle fixing according to any one of claims 1 to 5, **characterised in that** the counterbearing element (4, 24, 34) is of plate-like construction and is mounted in a receptacle (5, 25, 35) of the crosspiece (2, 22, 32).

7. Toggle fixing according to claim 5 or claims 5 and 6, **characterised in that** the bearing region (12, 42) has two bearing limbs (13, 43) which are separated from one another by a slot (14, 44), the slot (14, 44) preferably being U-shaped.

8. Toggle fixing according to claim 7, **characterised in that** the receptacle (5, 25, 35) has two receiving openings (17, 47) for receiving the bearing limbs (13, 43), the receiving openings (17, 47) being separated from one another by a reinforcing rib (18).

9. Toggle fixing according to any one of claims 1 to 8, **characterised in that** the counterbearing element (4, 24, 34) is made of metal and the crosspiece (2, 22, 32) is made of plastics material.

10. Toggle fixing according to any one of claims 1 to 9, **characterised in that** the opening (8) has an internal thread (9) which is implemented as a standard metric thread or as a UNC thread.

## Revendications

1. Cheville à bascule (1, 21, 31) dévolue à la fixation d'un objet à un composant structurel à paroi mince,
comprenant une barrette (2, 22, 32) et une languette (3) reliée à la barrette (2, 22, 32) et servant à retenir ladite barrette (2, 22, 32) au cours du montage, sachant que ladite barrette (2, 22, 32) s'étend le long d'un axe longitudinal (L_{A}) et comporte, du côté tourné vers ladite languette (3), une face de support (7) conçue pour venir en applique contre le composant structurel, et
sachant que ladite barrette (2, 22, 32) est percée d'une ouverture (8) destinée à recevoir une vis (10a, 10b), laquelle ouverture (8) s'étend le long d'un axe longitudinal (L_{Ö}), transversalement par rapport audit axe longitudinal (L_{A}) de la barrette,
**caractérisée par le fait**
**qu'**au moins un élément de contre-butée (4, 24) disposé sur la barrette (2, 22) se trouve, par rapport à l'axe longitudinal (L_{Ö}) de l'ouverture, à une distance (A_{W}) inférieure à la moitié du diamètre intérieur (D_{K}) de ladite ouverture (8).

2. Cheville à bascule selon la revendication 1, **caractérisée par le fait que** la distance (A_{W}), comprise entre l'élément de contre-butée (4, 24, 34) et l'axe longitudinal (L_{Ö}) de l'ouverture, est inférieure d'au moins 1,0 millimètre, de préférence d'au moins 1,5 millimètre, en particulier d'au moins 2,0 millimètres, à la moitié du diamètre intérieur (D_{K}) de ladite ouverture (8).

3. Cheville à bascule selon la revendication 1 ou 2, **caractérisée par le fait que** l'élément de contre-butée (4, 24, 34) est réalisé de façon telle qu'il puisse être mû à l'écart de l'axe longitudinal (L_{Ö}) de l'ouverture lors de l'insertion d'une vis (10a, 10b) dans ladite ouverture (8).

4. Cheville à bascule selon l'une des revendications 1 à 3, **caractérisée par le fait que** l'élément de contre-butée (4, 24, 34) est réalisé sous la forme d'un bras en porte-à-faux, dont l'extrémité libre (11) est éloignée de la face de support (7) de la barrette (2, 22, 32).

5. Cheville à bascule selon l'une des revendications 1 à 4, **caractérisée par le fait que** l'élément de contre-butée (4, 24, 34) comprend une zone d'appui (12, 42) et une zone (15, 45) de venue en prise, ladite zone (15, 45) de venue en prise étant coudée par rapport à ladite zone d'appui (12, 42).

6. Cheville à bascule selon l'une des revendications 1 à 5, **caractérisée par le fait que** l'élément de contre-butée (4, 24, 34) est réalisé en forme de plaquette et est placé dans un logement (5, 25, 35) de la barrette (2, 22, 32).

7. Cheville à bascule selon la revendication 5, ou les revendications 5 et 6,
**caractérisée par le fait que** la zone d'appui (12, 42) comporte deux branches d'appui (13, 43) séparées l'une de l'autre par une fente (14, 44), laquelle fente (14, 44) est préférentiellement configurée en U.

8. Cheville à bascule selon la revendication 7, **caractérisée par le fait que** le logement (5, 25, 35) comporte deux orifices de réception (17, 47) conçus pour recevoir les branches d'appui (13, 43), lesdits orifices de réception (17, 47) étant séparés l'un de l'autre par une membrure de renforcement (18).

9. Cheville à bascule selon l'une des revendications 1 à 8, **caractérisée par le fait que** l'élément de contre-butée (4, 24, 34) consiste en un métal, et la barrette (2, 22, 32) consiste en une matière plastique.

10. Cheville à bascule selon l'une des revendications 1 à 9, **caractérisée par le fait que** l'ouverture (8) présente un filetage intérieur (9) réalisé en tant que filetage métrique normalisé, ou en tant que filetage UNC.
